**Europäisches Patentamt**

**European Patent Office**

**Office européen des brevets**

(11) Veröffentlichungsnummer: **0 184 578**

**B1**

(12) # EUROPÄISCHE PATENTSCHRIFT

(45) Veröffentlichungstag der Patentschrift:
31.05.89

(51) Int. Cl.⁴: **G 01 D 5/34**, G 01 D 11/00

(21) Anmeldenummer: **85890287.7**

(22) Anmeldetag: **21.11.85**

(54) Inkrementales Messsystem zum Messen von Längen und Winkeln.

(30) Priorität: **05.12.84 AT 3856/84**

(43) Veröffentlichungstag der Anmeldung:
**11.06.86 Patentblatt 86/24**

(45) Bekanntmachung des Hinweises auf die Patenterteilung:
**31.05.89 Patentblatt 89/22**

(84) Benannte Vertragsstaaten:
**BE CH DE FR GB IT LI LU NL SE**

(56) Entgegenhaltungen:
**EP-A-0 076 858**
**DE-B-1 548 708**
**US-A-4 224 514**
**US-A-4 375 592**

(73) Patentinhaber: **EMR Elektronische Mess- und Regelgeräte Gesellschaft m.b.H., A-5121 Tarsdorf (AT)**

(72) Erfinder: **Rieder, Heinz, Riedersbach 90, A-5120 St. Pantaleon (AT)**
Erfinder: **Schwaiger, Max, Nr. 298, A-5121 Ostermiething (AT)**

(74) Vertreter: **Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)**

## Beschreibung

Die Erfindung betrifft ein inkreimentales Meßsystem zum Messen von Längen und Winkeln auf optoelektronischem Wege, mit einem Inkrementalmaßstab und einer gegenüber diesem verstellbaren Abtasteinheit mit gegeneinander um Teilungsbruchteile versetzten Abtastgittern, denen je ein optoelektronischer Empfänger und eine diesen Empfänger über den Maßstab und das Abtastgitter beleuchtende Leuchtdiode zugeordnet ist, so daß bei der Relativverstellung von Abtasteinheit und Maßstab in den Empfängern gegeneinander phasenverschobene, einer Sinusfunktion mit der Maßstabteilung entsprechender Signalzuglänge folgende Signale erzeugt werden, wobei Einrichtungen zur Feineinstellung der Signalstärke und/oder der Phasenlage vorgesehen sind.

Bei solchen Meßsystemen können lineare Maßstäbe oder, bei sogenannten Drehgebern, Maßstäbe auf einer Kreisteilung oder Kreisbogenteilung vorgesehen sein. Die Abtastgitter sind gegeneinander um ganzzahlige Vielfache der Maßstabteilung plus bestimmten Bruchteilen dieser Teilung versetzt. In den meisten Fällen werden Phasenverschiebungen der erzeugten Ausgangssignale um 90° angestrebt, welche Phasenverschiebung im einfachsten Fall unter Verwendung von zwei entsprechend versetzten Gittern mit zugeordneten Empfängern und Beleuchtungseinrichtungen erzielbar ist, meist aber dadurch erreicht wird, daß man vier gegeneinander um jeweils 90° verschobene Signale erzeugt und diese Signale paarweise in Antiparallelschaltung zusammenführt, so daß dann am Ausgang der Abtasteinheit die beiden um 90° verschobenen Signale anstehen. Durch die paarweise Antiparallelschaltung wird eine Reihe von Störfaktoren eliminiert.

Die Beleuchtungseinrichtungen können je nach dem verwendeten Abtastverfahren die optoelektronischen Empfänger im Durchlicht-, Auflicht- oder Reflexionsverfahren beleuchten, wobei in dem einen Fall der Maßstab aus Glas hergestellt wird und die Leuchtdioden den zugeordneten optoelektronischen Empfänger durch Maßstab, Maßstabteilung und Gitterträger hindurch beleuchten, also die Leuchtdioden und die Empfänger an einander gegenüberliegenden Seiten des Maßstabes angeordnet sind. Nach anderen Möglichkeiten verwendet man Maßstäbe mit reflektierender Teilung und ordnet Gitter und Beleuchtungseinrichtungen an der gleichen Maßstabseite an, so daß im zugeordneten Empfänger die stärksten Signale erhalten werden, wenn sich gegenüber einer Gitterlücke ein volles reflektierendes Maßstabinkrement befindet. Eine Zwischenlösung besteht darin, die Maßstabrückseite zu verspiegeln und die Maßstabteilung und das Gitter mit dem dahinter angeordneten Empfänger durch von der Empfängerseite aber schräg auf die Reflexionsschicht aufgestrahltes Licht einer Leuchtdiode zu beleuchten.

In den meisten Fällen wird mit Gleichlicht gearbeitet. Die erzielten phasenverschobenen Signale können auf verschiedene Art und Weise weiterverarbeitet werden. Im einfachsten Fall wird daraus, welches der beiden Signale dem anderen voreilt, die Verstellrichtung bestimmt und es werden die Nulldurchgänge der Signale ausgetriggert und aus ihnen Zählsignale gewonnen, die einen Vor-Rückwärtszähler beaufschlagen, dessen Zählrichtung durch das der Verstellrichtung entsprechende Signal bestimmt wird. Der von der Abtasteinheit zurückgelegte Weg wird in Zählsignalen ausgedrückt und im Zähler festgehalten. In gleicher Weise können Steuereinrichtungen für Maschinensteuerungen und Roboter mit den Zählsignalen oder von diesen abgeleiteten Signalen beaufschlagt werden. Es gibt eine Reihe von Hilfsschaltungen zur elektronischen Unterteilung des Maßstabes oder zur Interpolationsberechnung von Zwischenwerten. Ferner ist es auch bekannt, zur Erleichterung der Unterteilung statt mit Gleichlicht mit moduliertem Licht zu arbeiten und in Sonderschaltungen aus einer im modulierten empfangenen Signal proportional dem eben anstehenden Teilungsbruchteil erzeugten Phasenverschiebung die Größe dieses Teilungsbruchteiles zu bestimmen.

Jede genaue Messung und insbesondere jede genauere Unterteilung auf elektronischem Wege ist davon abhängig, daß der vorbestimmte Phasenversatz der empfangenen Signale eingehalten wird und daß die an den einzelnen Empfängern empfangenen Signale möglichst gleich groß sind. Allgemein gesagt, sollen somit alle Signale gleiche Signalform und gleiche Signalhöhe aufweisen und auch die Phasenverschiebung möglichst genau sein. Es gibt eine Reihe von Kompensationsschaltungen, mit deren Hilfe die von den optoelektronischen Empfängern erzeugten Signale nachträglich geformt und auch auf eine bestimmte Phasenverschiebung eingestellt werden können. Diese Kompensationsschaltungen erfordern aber nachträgliche Eingriffe in die Empfängerschaltung und sind mit dem prinzipiellen Nachteil behaftet, daß eben eine Umformung der empfangenen Signale vorgenommen wird, so daß Ungenauigkeiten möglich sind.

Bei ähnlichen Meßsystemen, bei denen aber für alle optoelektronischen Empfänger nur eine gemeinsame Beleuchtungseinrichtung vorgesehen ist, die über eine nachgeordnete Optik die optoelektronischen Empfänger durch Gitter und Maßstab hindurch beleuchtet, ist es bereits bekannt, jedem Gitter an der anderen Maßstabseite eine Lochblende vorzuordnen und die Größe der Blende durch eine quer in das Loch einstellbare Schraube zu verändern. Damit kann allenfalls die Beleuchtungsstärke bei den einzelnen Empfängern variiert werden, doch kann es zu unerwünschten Nebenerscheinungen, insbesondere einer ungleichmäßigen Ausleuchtung des Gitterbereiches, zu Beugungen und zu einer unerwünschten Änderung der Phasenlage der empfangenen Signale kommen, so daß diese Signale wieder über den Empfängern nachgeordnete Formerstufen hinsichtlich der Phasenlage und auch der Signalhöhe korrigiert werden müssen.

Aus der US-A-4 375 592 ist eine ähnliche Ausführung bekannt, bei der aber lediglich eine Strichscheibe durch Abtastfenster hindurch abgetastet wird. Jedem Abtastfenster ist ein photoelektrischer Empfänger mit einer vorgeordneten Lochblende zugeordnet. Die Beleuchtung erfolgt über eigene Photodioden für jedes Fenster. Um zu verhindern, daß das Licht einer Photodiode auf das der benachbarten Photodiode zugeordnete Fenster fällt, sind die Dioden mit Blenden versehen, deren Öffnung sich vom Diodendurchmesser trichterartig zur Austrittsseite gegenüber dem Fenster verjüngt. Bei Regelschaltungen mit gemeinsamer Beleuchtung ist es aus der US-A-4 224 514 bekannt, zusätzlich zu den Abtastgittern ein Fenster vorzusehen und das durch dieses Fenster fallende Licht mit einem Fühler zu erfassen, der am Referenzeingang einer Regelschaltung zur Steuerung des Verstärkungsgrades der an den Gittern empfangenen Signale liegt. Ebenfalls zur Einstellung der Beleuchtungsstärke eines photoelektrischen Empfängers bei einer Abtasteinheit für einen Maßstab ist nach der DE-B-1 548 708 vorgesehen, daß die einzige Lichtquelle einerseits über einen Kondensor, Maßstab, Abtasteinheit und photoelektrischen Empfänger beleuchtet und anderseits ihr Licht auch auf einen weiteren lichtelektrischen Empfänger fällt, dessen Signal einer Regelschaltung für den Betriebsstrom der Lichtquelle zugeführt wird. Zwischen dem letztgenannten lichtelektrischen Empfänger und der Lichtquelle kann noch ein optisches Dämpfungsglied, beispielsweise eine Blende, zum Angleich der Lichtstärke des optischen Einganges der Regelschaltung an die des optischen Einganges der Abtasteinrichtung vorgesehen sein.

Aus der EP-Al-0 076 858 ist es ferner bekannt, einzelne, eine Strichscheibe und je wenigstens zwei Abtastgitter beleuchtende Lichtquellen vorzusehen. Dabei wird angegeben, daß es notwendig wird, jede Lichtquelle so einzustellen, daß das Zentrum ihrer Lichtabgabe genau auf der Grenzlinie zwischen den beiden von dieser Lichtquelle zu beleuchtenden Abtastgittern liegt, wobei die Neigung der Lichtquellen so eingestellt wird, daß eine gleichmäßige Lichtverteilung erzielt wird und überdies die Lichtverteilung durch eine vor der Lichtquelle angeordnete Blende beeinflußt wird, um überschüssiges Licht auszublenden. Wie diese Einstellung genauer erfolgt, ist nicht angegeben, es wird nur gesagt, daß es sehr schwierig ist, diese Einstellungen vorzunehmen und während des Betriebes zu erhalten. Zur Vermeidung dieser Schwierigkeiten wird vorgesehen, eine einzige Lichtquelle zu verwenden, die einzelnen Abtastfelder von dieser Lichtquelle aus über optische Lichtleitfasern zu beleuchten und auch das durch die Abtastgitter und die Strichscheibe fallende Licht mit entsprechenden Lichtleitfasern zu empfangen und den Empfängern zuzuleiten. Beide geoffenbarten Lösungen unterscheiden sich gattungsmäßig von einem Meßsystem nach dem einleitenden Teil des Anspruches 1, bei dem mehrere Abtastgitter und Empfänger vorgesehen und jedem Empfänger und Abtastgitter eine Leuchtdiode zugeordnet ist.

Aufgabe der Erfindung ist es, ein Meßsystem der eingangs genannten Art zu verbessern und einfache Mittel anzugeben, die eine individuelle Justierung und Feineinstellung der Signalstärke und/oder Phasenlage ermöglichen.

Die gestellte Aufgabe wird dadurch gelöst, daß bei einem Meßsystem nach dem einleitenden Teil des Patentanspruches 1 die Leuchtdioden an einer Platine bei der Montage einzeln in ihrer Lage justierbar angebracht sind und daß die Platine aus elastisch nachgiebigem Material besteht, die Leuchtdioden mit stiftartigen Handhaben versehen und diese Handhaben in Langlöchern einer Stützplatte festlegbar sind.

Durch die erfindungsgemäße Ausführung wird es möglich, die Herstellungsabweichungen der Leuchtdioden sowie durch Montage-oder Fertigungsungenauigkeiten des Meßsystems hervorgerufenen Abweichungen auszugleichen. Dabei ist sowohl eine Ausrichtung der optischen Achse der Leuchtdioden als auch eine Einstellung durch Abstandsänderung vom zugeordneten Abtastgitter zur Veränderung der Beleuchtungsstärke möglich. Beide Einstellungen werden durch die Herstellung der Platine aus elastisch nachgiebigem Material und durch die stiftartigen Handhaben an den Leuchtdioden erleichtert. Jede Leuchtdiode wird bei der Justierung verstellt, bis in der eingeschalteten Empfängerschaltung die gewünschte Signalhöhe und der gewünschte Phasenversatz auftritt. Die so bei der Montage justierten Leuchtdioden können in der Stützplatte durch Festsiegeln, Festkleben, Aufbringen von starren Montagebrücken und ähnliche Maßnahmen fixiert werden, wobei die Langlöcher den praktisch zulässigen bzw. möglichen Justierbereich begrenzen.

Man kann zusätzlich die Lichtstärke der Leuchtdioden durch zugeschaltete Regelwiderständen einstellbar machen. In Kombination mit der Verstellbarkeit der Leuchtdioden wird dadurch die Korrektur- und Einstellmöglichkeit weiter vereinfacht und verbessert.

In der Zeichnung ist der Erfindungsgegenstand beispielsweise veranschaulicht. Es zeigt

Fig. 1 einen Inkrementalmaßstab mit zugeordneter Abtasteinheit im Längsschnitt,

Fig. 2 in größerem Maßstab eine Detailansicht zu Fig. 1 und

Fig. 3 und 4 zwei Prinzipschaltschemen für die Auswertungseinheit.

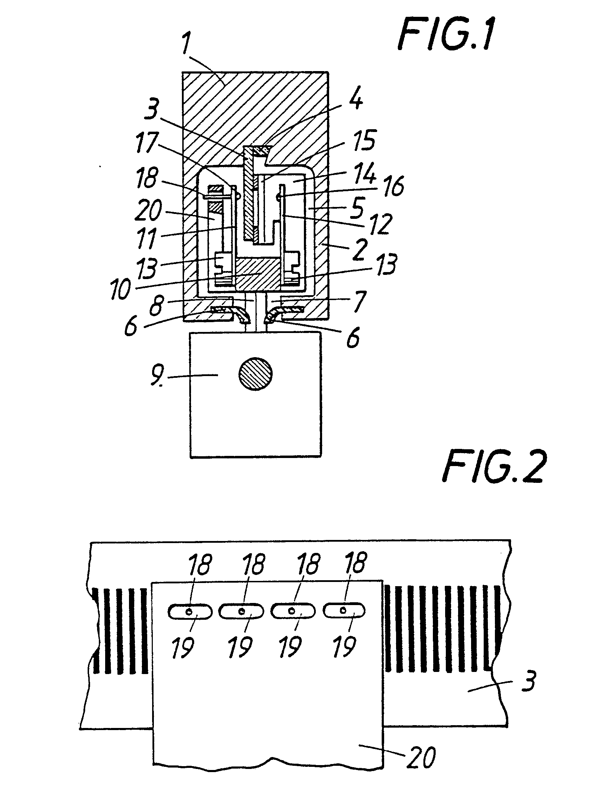

Nach den Fig. 1 und 2 ist ein einen verstärkten Boden 1 aufweisendes rohrförmiges Schutzgehäuse 2 für einen Glasmaßstab 3 vorgesehen, der in einer Schwalbenschwanznut des verstärkten Bodens 1 mit Hilfe eines elastischen Klemmkörpers 4 gehalten ist und mit einem eine Inkrementalteilung tragenden Teil in die Höhlung 5 des Schutzgehäuses einragt. Unten besitzt das Schutzgehäuse einen mit Dichtlippen 6 versehenen Schlitz 7, durch den ein Schwert 8 einragt, das mit dem Teil, dessen Relativverstellung zu messen ist, beispielsweise einem Werkzeugschlitten 9 gekuppelt ist. Innerhalb der Rohrhöhlung 5 ist am Schwert 8 ein Meßschlitten 10 befestigt, der an beiden Seiten des Maßstabes 3 Platinen 11, 12 trägt, die beispielsweise mit Hilfe von Schrauben 13 befestigt sind. Der Meßschlitten 10 ist neben der Platine 12 mit einer Halterung 14 versehen, an der eine am Maßstab geführte Abtastplatte 15 angebracht ist, wobei ein nicht dargestelltes Zwischenglied vorgesehen ist, das eine Relativverstellung zwischen Abtastplatte 15 und Halterung 14 zuläßt, so daß die Abtastplatte 15 immer genau dem Maßstab folgt, also in Querrichtungen Relativverstellungen von Abtastplatte 15 und Meßschlitten 10 möglich sind. Die Abtastplatte 15 trägt beim Ausführungsbeispiel vier Abtastgitter, die jeweils mehrere Gitterstriche in einer der Inkrementalteilung des Maßstabes 3 entsprechenden Teilung aufweisen und die gegeneinander in Maßstablängsrichtung um eine an sich beliebige ganze Anzahl von Maßstabinkrementen und zusätzlich untereinander um eine jeweils eine Viertelteilung versetzt sind. Jedem Abtastgitter ist als Empfänger ein Phototransistor 16 zugeordnet, der von einer Leuchtdiode 17 auf der Platine 11 durch Maßstab und Gitter hindurch beleuchtet wird, so daß an den nebeneinander angeordneten Transistoren bei der Abtastung, also der Relativverstellung von Abtasteinheit und Maßstab Signale entstehen, die gegeneinander im Idealfall um jeweils 90° versetzt sind, also beispielsweise die Phasenlagen 0°, 90°, 180° und 270° aufweisen.

Soweit bisher beschrieben, ist die Meßeinrichtung an und für sich bekannt. Beim Ausführungsbeispiel ist die Platine 11, welche die Versorgungsleitungen für die Leuchtdioden trägt, aus elastisch nachgiebigem Folienmaterial gefertigt. Im Bereich jeder Leuchtdiode 17 ist an der Platine 11 ein Stift 18 angebracht, der durch ein Langloch 19 in einer zusätzlich vorgesehenen Stützplatte 20 führt. Durch leichtes Kippen und/oder Verschieben des Stiftes 18 im jeweiligen Langloch 19 kann die Relativlage und Abstrahlrichtung der jeweiligen Leuchtdiode justiert werden. Nach der Justierung werden Stift 18 und damit die jeweilige Leuchtdiode durch einen in das Langloch 19 eingebrachten Kittpfropfen, durch Festkleben od. dgl. bzw. durch Ausgießen des Langloches fixiert.

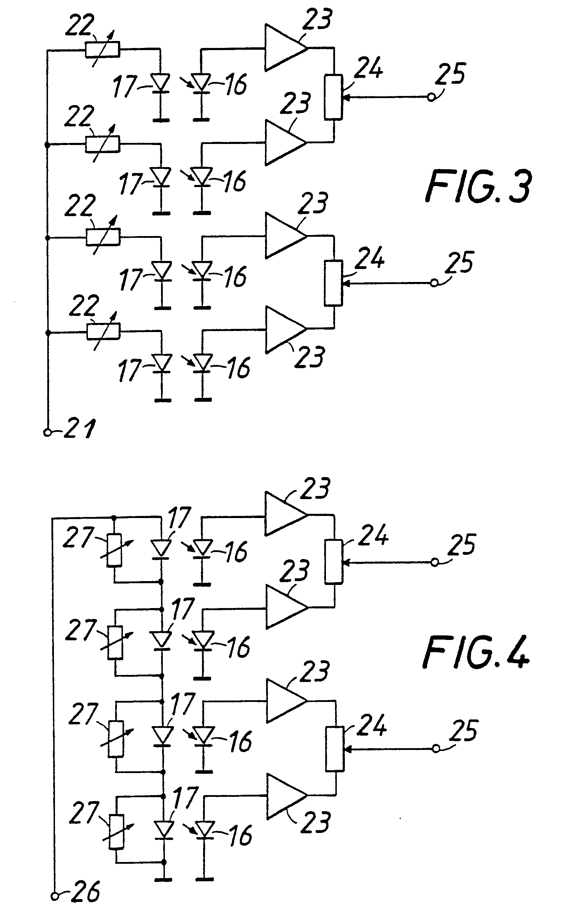

Nach Fig. 3 sind die Leuchtdioden 17 in einem Gleichspannungs-Versorgungskreis 21 parallel geschaltet. Jede Leuchtdiode 17 wird über einen mit ihr in Serie geschalteten Widerstand 22 versorgt, der als Regelwiderstand, Trimmer oder auch als auswechselbarer Widerstand ausgeführt sein kann. Durch Einstellung bzw. Auswahl des jeweiligen Widerstandes 22 kann die Lichtstärke der einzelnen Leuchtdioden 17 individuell eingestellt werden. Die an den Phototransistoren 16 empfangenen Signale werden über auf der Platine 12 angebrachte Verstärker 23 geleitet und dann in Antiparallelschaltung paarweise auf Widerständen 24 zusammengeführt, an deren Abgriffen 25 zwei um 90° phasenverschobene Signale anstehen. Diese Signale können der weiteren Auswertung zugeführt werden.

Fig. 4 zeigt eine Schaltung, bei der die Leuchtdioden 17 untereinander in Serie in einem Wechselspannungs-Versorgungskreis 26 liegen, also in einer bestimmten Frequenz moduliert werden. Zur individuellen Einstellung der Lichtstärke ist zu jeder Leuchtdiode 17 ein Regelwiderstand 27 parallel geschaltet. An den Phototransistoren 16 werden Signale in der Modulationsfrequenz erhalten, die überdies in ihrer Amplitude untereinander phasenverschoben entsprechend der Relativverstellung der Abtasteinheit gegenüber dem Maßstab moduliert sind. Diese Signale werden wieder über Verstärker 23 zu Abgriffen 25 geführt und dann beispielsweise über Hoch- und Tiefpaßfilter geleitet, wobei an den Tiefpaßfiltern das der Maßstabteilung entsprechende Modulationssignal erhalten wird, das in Zählsignale umgeformt werden kann, wogegen über die Hochpaßfilter eine Phasendiskriminatorschaltung angeschlossen wird, die aus der erzeugten Phasenverschiebung im Trägersignal im Sinne einer elektronischen Maßstabunterteilung weitere dem jeweiligen Maßstabbruchteil entsprechende Signalgruppen erzeugt. Die letzteren Signale und die Zählsignale werden in einem Mikroprozessor verarbeitet und einer Anzeige- oder Steuereinrichtung zugeführt.

Die Feinjustierung der Leuchtdioden 17 kann auch anders als dargestellt erfolgen. Für die Justierung werden vorzugsweise an die Abgriffe 25 Meßschaltungen oder Oszillographen angeschaltet, um den notwendigen Abgleich der Signalhöhe und Phasenlage durch Verstellung der Leuchtdioden 17 überwachen zu können.

**Patentansprüche**

1. Inkrementales Meßsystem zum Messen von Längen und Winkeln auf optoelektronischem Wege, mit einem Inkrementalmaßstab (3) und einer gegenüber diesem verstellbaren Abtasteinheit (10) mit gegeneinander um Teilungsbruchteile versetzten Abtastgittern (15), denen je ein optoelektronischer Empfänger (16) und eine diesen Empfänger über den Maßstab (3) und das Abtastgitter (15) beleuchtende Leuchtdiode (17) zugeordnet ist, so daß bei der Relativverstellung von Abtasteinheit (10) und Maßstab (3) in den Empfängern (16) gegeneinander phasenverschobene, einer Sinusfunktion mit der Maßstabteilung entsprechender Signalzuglänge folgende Signale erzeugt werden, wobei Einrichtungen zur Feineinstellung der Signalstärke und/oder der Phasenlage vorgesehen sind, dadurch gekennzeichnet, daß die Leuchtdioden an einer Platine (11) bei der Montage einzeln in ihrer Lage justierbar angebracht sind und däß die Platine (11) aus elastisch nachgiebigem Material besteht, die Leuchtdioden (17) mit stiftartigen Handhaben (18) versehen und diese Handhaben (18) in Langlöchern einer Stützplatte (20) festlegbar sind.

2. Inkrementales Meßsystem nach Anspruch 1, dadurch gekennzeichnet, daß die Lichtstärke der Leuchtdioden (17) über zugeschaltete Regelwiderstände (22, 27) einstellbar ist.

## Claims

1. An incremental measuring system for an optoelectronic measurement of lengths and angles, comprising an incremental scale member (3) and a scanning unit (10), which is adjustable relative to said scale member and provided with scanning gratings (15), which are relatively offset by fractional parts of a scale increment and each of which has associated with it an optoelectronic receiver (16) and a light-emitting diode (17) for illuminating said receiver via the scale member (3) and the scanning grating (15) so that a relative adjustment of the scanning unit (10) and the scale member (3) will result in the receivers (16) in a generation of relatively phase-displaced signals, which follow a sine function having a signal train length which corresponds to a scale increment wherein means are provided for a fine adjustment of the signal strength and/or the phase angle, characterized in that the light-emitting diodes are individually mounted on a printed circuit board (11) during the assembling operation in such a manner that they can be adjusted in position and the printed circuit board (11) consists of elastically yieldable material, the lightemitting diodes (17) are provided with pinlike handles (18) and said handles (18) are adapted to be fixed in position in slots of a backing plate (20),

2. An incremental measuring system according to claim 1, characterized in that the light intensity of the light-emitting diodes (17) is adjustable by the provision of variable resistors (22, 27) which are connected in circuit.

## Revendications

1. Système de mesure incrémental pour la mesure de longueurs et d'angles par voie opto-électronique, comprenant une règle graduée incrémentale (3) et une unité de lecture (10) pouvant se déplacer par rapport à cette règle et munie de grilles de lecture (15) décalées entre elles de fractions du pas, à chacune desquelles sont associés un récepteur opto-électronique (16) et une diode électroluminescente (17) qui éclaire ce récepteur par l'intermédiaire de la règle graduée (3) et de la grille de lecture (15), de telle manière que, lors d'un déplacement relatif entre l'unité de lecture (10) et la règle graduée (3), il se produise dans les récepteurs (16) des signaux déphasés les uns par rapport aux autres, qui suivent une fonction sinusoïdale d'une lonqueur de train de signaux qui correspond au pas de division de la règle graduée, cependant qu'il est prévu des dispositifs pour le réglage fin de la force des signaux et/ou de la position de phase,
caractérisé par le fait que les diodes électroluminescentes sont montées sur une platine (11) de façon à pouvoir être ajustées individuellement en position lors du montage et en ce que la platine (11) est faite d'une matière élastiquement déformable et par le fait que les diodes électroluminescentes (17) sont munies de poignées (18) du type tige, ces poignées (18) pouvant être fixées dans des trous oblongs d'une plaque d'appui (20).

2. Système de mesure incrémental selon la revendication 1,
caractérisé par le fait que l'intensité lumineuse des diodes électroluminescentes (17) peut être réglée par l'intermédiaire de résistances de réglage (22, 27) connectées dans leur circuit.

FIG.1

FIG.2

*FIG.3*

*FIG.4*